**Europäisches Patentamt**

**European Patent Office**

**Office européen des brevets**

(19)

(11) Veröffentlichungsnummer: **0 084 088**

**A1**

(12) # EUROPÄISCHE PATENTANMELDUNG

(21) Anmeldenummer: **82110189.6**

(22) Anmeldetag: **05.11.82**

(51) Int. Cl.³: **F 16 L 9/14**
**F 16 L 59/14**

(30) Priorität: **09.01.82 DE 3200441**

(43) Veröffentlichungstag der Anmeldung:
**27.07.83 Patentblatt 83/30**

(84) Benannte Vertragsstaaten:
**AT BE CH FR LI LU NL SE**

(71) Anmelder: **Felten & Guilleaume Energietechnik GmbH**
**Schanzenstrasse 24-30 Postfach 80 50 01**
**D-5000 Köln 80(DE)**

(72) Erfinder: **Tews, Wolfgang, Dipl.-Phys.**
**Oderstrasse 21**
**D-5090 Leverkusen 1(DE)**

(72) Erfinder: **Schmitz, Günter, Ing. grad.**
**Gr. Grimberger Weg 11**
**D-5068 Odenthal(DE)**

(72) Erfinder: **Albrecht, Christhart, Ing. grad.**
**Siegfriedstrasse 8**
**D-5000 Köln 50(DE)**

(72) Erfinder: **Schmitz, Helmuth, Ing. grad.**
**Kolibristrasse 6**
**D-5042 Erftstadt 1(DE)**

(54) **Flexibles Fernwärmeleitungs-Verbundrohr.**

(57) Die Erfindung betrifft ein flexibles Fernwärmeleitungs-Verbundrohr, mit einem wärmebeständigen Innenrohr (1), einer Wärmeisolierung (5) aus geschäumtem Kunststoff und mit einem Mantel (7). Sie löst die Aufgabe, ein gut liegefähiges, druckfestes und dauerhaft wärmeisoliertes Rohr zu schaffen, das korrosionsfrei und gegen innere und äußere aggressive Einflüsse beständig ist.

Hierzu besteht das Innenrohr (1) aus zwei konzentrischen Kunststoffschichten (2, 3), zwischen denen als Diffusionssperre (4) eine dünne Metallfolie angeordnet, und deren äußere (3) innerhalb der Schaumstoffisolierung (5) von einer Druckbandage (6) umfaßt ist, wobei der Schutzmantel (7) aus einem gegen Umwelteinflüsse beständigen extrudierbaren Kunststoff, z.B. Hochdruckpolyäthylen, besteht.

EP 0 084 088 A1

Fl 4651                          1                          08.01.82

Flexibles Fernwärmeleitungs-Verbundrohr

Die Erfindung betrifft ein flexibles Fernwärmeleitungs-Verbundrohr, nach dem Oberbegriff des Anspruchs 1. Sie dient insbesondere für Hausanschlüsse o.dgl. von einer Fernwärme-Hauptleitung.

Aus DE-PS 15 04 632 ist ein biegefähiges Metallrohr, z.B. aus
Kupfer, mit einer nahtlosen, wärmeisolierenden, an der Oberfläche geglätteten und/oder ummantelten biegsamen Hülle aus
einem geschäumten Kunststoff sowie ein Extrusionsverfahren zur
kontinuierlichen Herstellung dieser biegsamen Schaumstoffhülle
bekannt. Dieses Rohr läßt sich in allen Fällen einsetzen, in
denen ein Wärmeaustausch des darin geführten Mediums mit der
Umgebung verhindert werden soll, wobei die Oberfläche des
medienführenden Innenrohres aus Metall zufolge des ihr unmittelbar anliegenden biegsamen Schaumstoffes besser vor Korrosion geschützt ist, als mit einer kompakten Wärmeisolierung,
bei welcher erfahrungsgemäß Längskanäle und/oder unvermeidbare
Spalträume Korrosionserscheinungen bewirken.

Zugleich ist jedoch die ebenfalls korrosionsanfällige Innenfläche dieses Rohres schutzlos dem Einfluß der säuerlichen Einschlüsse wie Kohlensäure oder freier Sauerstoff oder auch
sonstiger agressiver Verunreinigungen des darin geführten
Mediums, zumeist Wasser, ausgesetzt. Gerade diese führen jedoch
- mehr als die äußeren Einflüsse - zu Korrosionserscheinungen insbesondere im Bereich von Schweißnähten und an mit dem Auge
nicht erkennbaren Haarrissen des metallischen Rohres und demzufolge schließlich zu dessen stellenweiser Zerstörung. Um
dies zu vermeiden, ist eine sorgfältige Reinigung und Aufbereitung des darin geführten Wassers oder sonstigen Mediums erforderlich, womit aber die Betriebskosten, z.B. eines Fernwärme-
Heizsystems, erheblich belastet werden. Nachteilig ist bei diesem Rohr ferner die geringe Druckfestigkeit als Folge der aus
Gründen der gewünschten Biegefähigkeit möglichst gering gewählten Wandstärke des Metallrohres, bzw. dessen geringe Biegefähigkeit bei für höhere Drücke ausreichender Wandstärke desselben.

Ferner ist aus DE-OS 20 03222 ein wärmeisoliertes, starres Rohr
aus Metall, faserverstärktem Kunststoff wie Polyvenylchlorid
oder aus Beton mit einer Schaumstoffisolierung und mit einer
diese zum Schutz gegen äußere Einflüsse feuchtigkeitsdicht umschließenden Deckschicht bekannt, die aus einem mit einander
teilweise überlappenden und miteinander verschweißten Windungen
aufgebrachten Band aus thermoplastischem Kunststoff, insbesondere Polyäthylen, besteht. Dies soll das Eindringen von - häufig agressive Verunreinigungen enthaltender - Feuchtigkeit in
die Schaumstoffisolierung von außen her verhindern, um deren
Zerstörung im Laufe der Zeit zu vermeiden. Diese Maßnahme allein
ist jeodch unzureichend, da hierbei das Eindringen der Feuchtigkeit in die Schaumstoffisolierung vom Inneren des Rohres her
nur dann ausgeschlossen ist, wenn dieses aus Metall besteht,
da Betonrohre bekanntlich "schwitzen" und auch durch Polyvenilchlorid und dergleichen Feuchtigkeit hindurch diffundieren
kann. Bei einem solchen Rohr aus Metall treten aber die vorausgehend geschilderten korrosionsbedingten Schwierigkeiten auf.

Der Erfindung liegt die Aufgabe zugrunde, ein gut biegefähiges,
druckfestes und dauerhaft wärmeisoliertes Rohr zu schaffen, das
absolut korrosionsfrei und gegen innere und äußere agressive
Einflüsse beständig ist. Diese Aufgabe wird durch die im Anspruch 1 gekannzeichnete Erfindung gelöst.

Vorteilhafte Weiterbildungen der Erfindung sind mit den Unteransprüchen 2 bis 8 angegeben, von welchen der Anspruch 2 einen
bevorzugten Schichtenaufbau des medienführenden Rohres, und
die Ansprüche 3 und 4 vorteilhafte Ausführungsvarianten der
Diffusionssperre desselben betreffen. Die Ansprüche 5 und 6
haben bevorzugte Ausführungen der Druckbandage und die Ansprüche
7 und 8 weitere Ausgestaltungen des Diffusionsschutzes zum Inhalt.

Die Vorteile der Erfindung liegen vor allem in der erhöhten
Beständigkeit und Dauerhaftigkeit des wärmeisolierten Rohres
und seiner Isolierung gegen schädliche äußere und innere Einflüsse jeder Art, die dessen Lebensdauer verringern könnten,
sowie in dem geringen Gewicht und der wesentlich besseren
Biegefähigkeit und somit erleichterten Handhabung des Rohres
bei dessen Montage. Zugleich stehen als Folge des sparsamen
Materialeinsatzes bei rationeller Fertigung dieses Rohres seine Herstellungskosten zu jener üblicher Rohre dieser Art in
einem günstigen Verhältnis.

Wesentlich ist hierzu, daß das Medienrohr als mehrschichtig
extrudiertes Kunststoffrohr mit einer wirksamen Diffusionssperre zwischen den aus hinsichtlich ihrer Eigenschaften wie
Warmfestigkeit und Beständigkeit gegenüber agressiven Medien
ausgewählten, bei geringer Schichtdicke gut biegbaren Kunststoffen besteht, und von einer trotz guter Flexibilität dessen
Druckfestigkeit bis zu 8 Bar auch bei erhöhter Temperatur von
mehr als 100 $^{\circ}$C in ausreichendem Maße gewährleistenden Druckbandage umschlossen ist. Insbesondere bei solchen Rohren mit
größerer Nennweite von mehr als 50 mm, beispielsweise über
80 mm, empfiehlt sich die Anordnung einer Diffusionssperre auch
unter dem äußeren Mantel, zum Schutz der Wärmeisolierung gegen
von außen durch diesen hindurch diffundierende Feuchtigkeit. Der
Schutzmantel kann gegebenenfalls auch einschließlich der Diffusionssperre mit einer Wellung, vorzugsweise Ringwellung, ausgebildet sein, um die gute Biegefähigkeit des gesamten Verbundrohres zu erhalten. Das so ausgebildete Fernwärmeleitungs-Verbundrohr kann in großer Länge kontinuierlich gefertigt, und aufgetrommelt zum Montageort gebracht werden. Dort werden hiervon genau den jeweiligen Erfordernissen entsprechende Längen desselben abgeschnitten und leicht verlegbar in einem Stück von einer Fernwärme-Hauptleitung zum Anschluß eines Abnehmers insbesondere einen Hausanschlußführend, mittels handelsüblicher Schlauchverbinder einfach und schnell mit diesem und mit einem Abzweig der Hauptleitung verbunden.

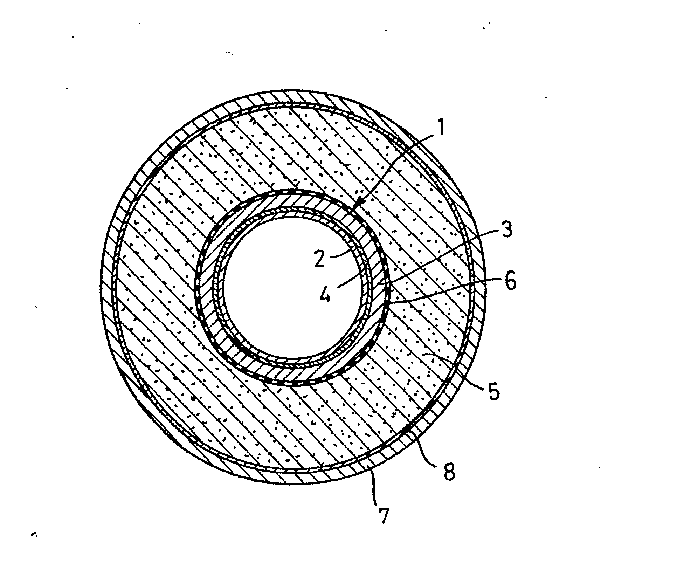

Nachstehend ist die Erfindung unter Angabe weiterer Einzelheiten und Vorteile derselben anhand eines in der Zeichnung veranschaulichten Ausführungsbeispieles näher erläutert.

Die Zeichnung zeigt einen Querschnitt durch ein solches Fernwärmeleitungs-Verbundrohr.

Das medienführende Innenrohr 1 dieses Verbundrohres besteht aus einer inneren 2 und einer äußeren konzentrischen Kunststoffschicht 3, wobei zwischen diesen konzentrischen Schichten 2 bzw. 3 als Diffusionssperre 4 eine dünne Metallfolie angeordnet ist. Stattdessen kann auf der Oberfläche der Innenschicht 2 eine dünne Metallschicht einer Schichtstärke von weniger als 0,1 mm unmittelbar aufgebracht, vorzugsweise aufgedampft sein.

Die äußere Schicht 3 des Innenrohres 1 ist unmittelbar von einer ihm trotz geringer Wandstärke die notwendige mechanische Festigkeit, insbesondere Warmfestigkeit bei hohem Druck, verleihenden Druckbandage 6 umfaßt, die ihrerseits von einer Schaumstoff-Wärmeisolierung 5, beispielsweise aus einem flexibel geschäumten Polyurethan oder aus einem verzellten Polyäthylen fest umschlossen ist. Diese ist mit einem Schutzmantel 7 umgeben, der aus einem gegen Umwelteinflüsse beständigen extrudierbaren Kunststoff, vorzugsweise einem Hochdruckpolyäthylen oder einem Propylen-Copolymer bzw. einem Äthylen-
Propylen-Copolymergemisch besteht.

Innerhalb des Schutzmantels 7 kann ein äußerer Diffusionsschutz
8 angeordnet sein, z.B. in Form einer unmittelbar auf die zuvor
geglättete Oberfläche der Schaumstoff-Wärmeisolierung 5 aufgedampften dünnen Metallschicht oder eines um die Wärmeisolierung
5 mit überlappenden Randzonen längseinlaufend herumgelegten
Aluminiumfolienbandes, welches vorzugsweise zumindest einseitig copolymerbeschichtet ist. Bei der mit hoher Temperatur erfolgenden Extrusion des äußeren Schutzmantels 7 werden die
überlappenden Randzonen eines solchen Folienbandes dicht miteinander verschweißt. Dadurch ist mit großer Sicherheit gewährleistet, daß von außen her absolut keine Feuchtigkeit zur
Schaumstoff-Wärmeisolierung 5 gelangen kann, selbst wenn die
Feuchtigkeit in geringer Menge durch den Mantel 7 hindurch
diffundieren sollte, oder falls dieser durch mechanische Einwirkung von außen beschädigt würde.

Den gleichen Zweck erfüllt in erhöhtem Maße die innere Diffusionssperre 4 insbesondere im Hinblick auf die sehr geringe
Wandstärke der inneren konzentrischen Kunststoffschicht 2 des
Innenrohres 1, die zwar gegen chemische Einflüsse und gegen
Erosion beständig und warmfest, jedoch nicht absolut feuchtigkeitsdicht ist, da sie mit einer Schichtdicke von höchstens
1 mm, vorzugsweise weniger als 0,6 mm, aus einem bis über
120 $^{o}$C, vorzugsweise bis 140 $^{o}$C, warmfesten Kunststoff ausgebildet ist. Durch die Auswahl des Kunststoffes der inneren
konzentrischen Schicht 2 ist die relativ hohe Warmfestigkeit
des Verbundrohres und seine Unempfindlichkeit gegen Verunreinigungen des darin geführten Mediums wie mit Säure und sonstigen
Schadstoffen, z.B. darin gelöster Sauerstoff belastetes übliches
Leitungswasser bedingt, bei einem die Fertigungskosten mindernden sparsamen Einsatz solcher Kunststoffe wie Perfluoräthylenpropylen, Polyvinylidenfluorid o.dgl., der zugleich zu der hohen

0084088

Flexibilität des Innenrohres 1 und somit des gesamten Verbundrohres beiträgt.

Mit größerer Schichtdicke als die erstere ist fest um die Diffusionssperre 4 die äußere konzentrische Kunststoffschicht 3 aus
einem ebenfalls, obgleich im geringeren Maße, ausreichend wärmebeständigen extrudierbaren Kunststoff wie einem Polyamid,
einem Polypropylen oder einem Polyäthylen-Polypropylen-Gemisch
oder auch aus vernetztem Polyäthylen angeordnet, wobei es sich
um biegsamere und wohlfeilere Kunststoffe als bei jenen der
Innenschicht 2 handelt. Die Schichtdicke dieser Schicht 3 ist
so gewählt, daß das Innenrohr 1 für sich formbeständig ist und
auch bei erhöhter Temperatur bleibt, und der Wärmedurchgang
durch die Wandung des Innenrohres 1 soweit gebremst wird, daß
die dieses umgebende Schaumstoffisolierung 5 keiner unzuträglichen Wärmebelastung ausgesetzt ist.

Wesentlich für die Formbeständigkeit des Innenrohres 1 bei
hohen Temperaturen und Drücken ist die an dessen Oberfläche
innerhalb der Wärmeisolierung 5 angeordnete Druckbandage 6.
Diese kann als auf das Innenrohr 1 mit Vorspannung wendelförmig
aufgebrachtes Geflecht aus hochfesten Fasern, oder aus in wenigstens zwei einander mit unterschiedlichem Steigungswinkel kreuzenden Lagen von auf das Innenrohr 1 aufgeseilten oder aufgesponnenen hochfesten Fasern bzw. Faserbündeln ausgebildet sein.
Die jeweils bevorzugte Ausführungsform der Druckbandage 6 richtet sich vor allem nach den Betriebsbedingungen,für welche das
Fernwärmeleitungs-Verbundrohr ausgelegt ist, aber auch nach den
vorhandenen Fertigungsmöglichkeiten und den hierzu verwendeten
hochfesten Glas-, Kohle- oder Kunststoff-Fasern, z.B. aus einem
Polyester oder einem Polyamid, insbesondere einem unter der
Handelsbezeichnung "Kevlar" bekannt gewordenen aromatischen
Polyamid auf der Basis von m-Phenylendiamin und Therephtalsäure.
Das Aufbringen einer aus einem Geflechtwickel bestehenden Druckbandage ist zumeist mit geringerem Aufwand durchführbar, hingegen die mechanische Festigkeit der aus auf-geseilten oder -gesponnenen einzelnen Fasern oder -Verbänden bestehenden Druckbandage 6
in der Regel höher anzusetzen, als bei der ersteren. Ein so ausgebildetes Fernwärmeleitungsrohr besitzt eine sehr hohe Lebensdauer und erfüllt in hohem Maße alle Anforderungen.

Ansprüche:

1. Flexibles Fernwärmeleitungs-Verbundrohr mit einem wärmebeständigen, medienführenden Innenrohr (1), einer Wärmeisolierung (5) aus geschäumtem Kunststoff und mit einem äußeren
   Mantel (7), **d a d u r c h   g e k e n n z e i c h n e t,**
   daß das Innenrohr (1) aus zwei konzentrischen Kunststoffschichten (2, 3) besteht, zwischen denen als Diffusionssperre (4) eine dünne Metallfolie angeordnet, und deren
   äußere (3) innerhalb der Schaumstoffisolierung (5) von einer
   Druckbandage (6) umfaßt ist, wobei der Schutzmantel (7) aus
   einem gegen Umwelteinflüsse beständigen extrudierbaren
   Kunststoff, z.B. Hochdruckpolyäthylen, besteht.

2. Flexibles Verbundrohr nach Anspruch 1, **d a d u r c h**
   **g e k e n n z e i c h n e t,** daß die innere (2) der konzentrischen Schichten des Innenrohres (1) mit geringer Schichtdicke von höchstens 1 mm aus einem bis über 120$^\circ$ warmfesten
   Kunststoff wie Perfluorethylenpropylen oder Polyvinylidenfluorid ausgebildet ist, und die diese über der Diffusionssperre (4) mit größerer Schichtdicke als die erstere umschließende Innenrohr-Außenschicht (3) aus einem ausreichend
   wärmebeständigen extrudierbaren Kunststoff wie einem Polyamid, Polypropylen oder einem Polyäthylen-Propylen-Gemisch
   bzw. einem vernetzten Polyäthylen besteht. .

3. Flexibles Verbundrohr nach Anspruch 1 oder 2, d a d u r c h
   g e k e n n z e i c h n e t, daß die Diffusionssperre (4)
   aus einem mit überlappenden Randzonen längseinlaufend um die
   Innenschicht (2) herumgelegt, vorzugsweise copolymerbeschichteten Aluminiumfolienband ausgebildet ist.

4. Flexibles Verbundrohr nach Anspruch 1 oder 2, d a d u r c h
   g e k e n n z e i c h n e t, daß die Diffusionssperre (4)
   aus einem um die Innenschicht (2) mit überlappenden Randzonen wendelförmig herumgelegten copolymerbeschichteten
   Aluminiumfolienband besteht.

5. Flexibles Verbundrohr nach einem der Ansprüche 1 bis 4,
   d a d u r c h   g e k e n n z e i c h n e t, daß die Druckbandage (6) als auf das Innenrohr (1) mit Vorspannung wendelförmig aufgebrachtes Geflecht aus hochfesten Fasern wie Glas-,
   Kohle- oder Kunststoff- z.B. Polyamid- oder Kevlar-Fasern
   ausgebildet ist.

6. Flexibles Verbundrohr nach einem der Ansprüche 1 bis 4,
   d a d u r c h   g e k e n n z e i c h n e t, daß die Druckbandage (4) aus in wenigstens zwei einander kreuzenden Lagen
   mit unterschiedlichem Steigungswinkel aufgebrachten, z.B.
   aufgeseilten oder -gesponnenen hochfesten Fasern oder Faserverbänden besteht.

7. Flexibles Verbundrohr nach einem der Ansprüche 1 bis 6,
   d a d u r c h   g e k e n n z e i c h n e t, daß als äußerer Diffusionsschutz (8) unter dem äußeren Mantel (7) eine
   um die Schaumstoff-Wärmeisolierung (5) mit überlappenden
   Randzonen längseinlaufend herumgelegte, vorzugsweise copolymerbeschichtete Aluminiumfolie angeordnet ist.

8. Flexibles Verbundrohr nach einem der Ansprüche 1 bis 7, d a d u r c h   g e k e n n z e i c h n e t, daß als Diffusionssperre (4) bzw. äußerer Diffusionsschutz (8) statt der Metallfolie eine unmittelbar auf der Oberfläche der Innenschicht (2) bzw. der umfänglich geglätteten Schaumstoff-Wärmeisolierung (5) gebildete, vorzugsweise aufgedampfte Metallschicht einer Stärke von weniger als 0,1 mm angeordnet ist.

Europäisches Patentamt

**EUROPÄISCHER RECHERCHENBERICHT**

Nummer der Anmeldung

## EINSCHLÄGIGE DOKUMENTE

EP 82110189.6

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE - A1 - 3 016 134 (MECANO)<br>* Gesamt *<br><br>-- | 1,2,3,<br>4 | F 16 L 9/14<br>F 16 L 59/14 |
| A | DE - A1 - 2 912 040 (STARKE)<br>* Gesamt *<br><br>-- | 1,3,5 | |
| A | DE - A1 - 2 535 843 (E. STEIN-<br>BACHER)<br>* Gesamt *<br><br>---- | 1 | |

| | RECHERCHIERTE SACHGEBIETE (Int. Cl. ³) |
|---|---|
| | F 16 L 9/00<br>F 16 L 11/00<br>F 16 L 59/00 |

Der vorliegende Recherchenbericht wurde für alle Patentansprüche erstellt.

| Recherchenort | Abschlußdatum der Recherche | Prüfer |
|---|---|---|
| WIEN | 24-02-1983 | SCHUGANICH |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82